# EUROPÄISCHE PATENTANMELDUNG

(11) **EP 2 153 734 A1**
(43) Veröffentlichungstag der Anmeldung: **17.02.2010**
(21) Anmeldenummer: 08013370.5
(22) Anmeldetag: 24.07.2008
(51) Int. Cl.: A23L 1/0524, A23L 1/308

(54) **Nahrungsergänzungsmittel sowie Verfahren zu dessen Herstellung**

(71) Anmelder: IPC Process-Center GmbH & Co. KG, 01277 Dresden (DE)
(72) Erfinder: Kempe, Wolfgang, 01169 Dresden (DE); Englisch, Wolfram, 01728 Bannewitz (DE); Brueckner, Kathrin, 01157 Dresden (DE); Ding, Gudrun, 97422 Schweinfurt (DE); Freudenberg, Erik, 01662 Meissen (DE); Jäkel, Hermann, 01465 Dresden, Ortsteil Langebrück (DE)
(74) Vertreter: Pfenning, Meinig & Partner GbR

(57) **Zusammenfassung**

Die Erfindung betrifft ein Nahrungsergänzungsmittel in loser und/oder agglomerierter partikulärer Form, das Pektin, zumindest teilweise verestertes und/oder amidiertes Pektin sowie Inulin enthält. Ebenso beschreibt die Erfindung ein Verfahren zur Herstellung eines Nahrungsergänzungsmittels.

## Beschreibung

Die Erfindung betrifft ein Nahrungsergänzungsmittel in loser und/oder agglomerierter partikulärer Form, das Pektin, zumindest teilweise verestertes und/oder amidiertes Pektin sowie Inulin enthält. Ebenso beschreibt die Erfindung ein Verfahren zur Herstellung eines Nahrungsergänzungsmittels.

Die Verwendung von Pektin in Form von Nahrungsergänzungsmitteln ist bekannt. So beschreibt "Effect of increased amounts of Pectin on a solid-liquid meal digestion in healthy man" von B. Flourie, N. Vidon, J.-A. Chayvialle, R. Palma, C. Franchisseur und J.-J. Bernier eine Studie, in der die Wirkung von 5, 10 bzw. 15 g Pektin auf den menschlichen Körper untersucht wurde.

In der US 2006/0286260 A1 ist eine Faser-Pulver-Komposition mit Pektin sowie ihre Herstellung aus unverdaulichen Maltodextrinen und natürlichen Gummiarten offenbart.

Ferner sind aus der DE 699 25 708 T2 Nahrungsmittelprodukte und ihre Herstellungsverfahren, insbesondere ballaststoffreiche Getreideprodukte auf Korngrundlage und Verfahren zu ihrer Herstellung bekannt, die ebenfalls geringe Mengen Pektin enthalten.

Nachteilig bei dem aus dem Stand der Technik bekannten, Pektin enthaltenden Mittel ist allerdings, dass die Pektin-Konzentrationen in den Mitteln sehr gering und die bekannten Darreichungsformen unpraktisch sind. So sind insbesondere bisher keine Pektin enthaltenden Zusammensetzungen bekannt, die eine gute Löslichkeit, z.B. in Wasser, aufweisen um eine Trinkbarkeit zu gewährleisten.

Ausgehend hiervon ist es Aufgabe der vorliegenden Erfindung, die Nachteile des Standes der Technik zu beseitigen und ein Nahrungsergänzungsmittel mit Pektin bereitzustellen, das sowohl eine gesundheitsfördernde Wirkung aufweist als auch sehr gut auflösbar ist.

Diese Aufgabe wird durch das Nahrungsergänzungsmittel mit den Merkmalen des Anspruchs 1 gelöst. Anspruch 15 offenbart ein Verfahren zur Herstellung eines Nahrungsergänzungsmittels. Weitere vorteilhafte Ausführungen sind in den abhängigen Ansprüchen gegeben.

Erfindungsgemäß wird ein Nahrungsergänzungsmittel in loser oder agglomerierter partikulärer Form, wie auch Mischungen hiervon, bereitgestellt, das Pektin, zumindest teilweise verestertes und/oder amidiertes Pektin, sowie Inulin enthält. Die Erfindung umfasst dabei grundsätzlich alle Pektine.

Pektine (Formel I) sind α-D-Galacturonsäure-Einheiten (Pektinsäure), die über die Kohlenstoff-Atome 1 und 4 miteinander verknüpft sind.

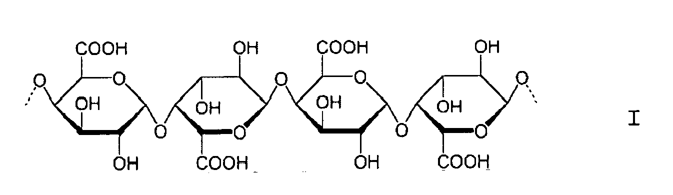

Sie kommen in allen höheren Landpflanzen vor. Hier findet man Pektine in allen festeren Bestandteilen, beispielsweise den Stängeln, Blüten, Blättern usw. Die Pektine sind in den Mittellamellen und primären Zellwänden enthalten und übernehmen dort eine festigende und wasserregulierende Funktion. Die Pektinzusammensetzung ist nicht nur von Pflanze zu Pflanze unterschiedlich, sondern hängt ebenso vom Typ und Alter des Pflanzengewebes ab. Besonders pektinreich sind Pflanzenteile mit relativ zähen bzw. harten Bestandteilen, z. B. Citrusfrüchte oder Fruchtstände von Sonnenblumen.

Beispielhaft ist nachfolgend der Pektin-Gehalt in verschiedenen Früchten (bezogen auf Frischgewicht) angegeben:
- Apfel 1-1,5 %
- Aprikose 1 %
- Kirsche 0,4 %
- Orange 0,5-3,5 %
- Möhren 1,4 %
- Apfeltrester 15 %
- Citrusschalen 30 %
- Quitten 50 %

Die Erfindung umfasst weiterhin zumindest teilweise veresterte Pektine. Bei teilweise veresterten Pektinen (Formel II) ist ein Teil der Carboxylgruppen mit Methanol verestert. Bei einem Veresterungsgrad von 7 bis 50% spricht man von niedrig veresterten Pektinen und bei einem Veresterungsgrad zwischen 50 und 75% handelt es sich um hoch veresterte Pektine. Pektine findet man vor allem in Citrusschalen und in Äpfeln.

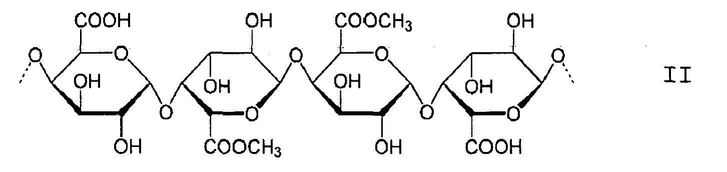

Pektine lassen sich wie folgt klassifizieren:
Pektine bzw. Pektinsäuren
   - haben per Definition einen Veresterungsgrad kleiner 5 %,
   - gelieren wie niedrigmethylierte Pektine,
   - und fallen bei hohen pH-Werten und großen Gehalten an mehrwertigen Kationen als Pektate, Salze der unveresterten Pektinsäuren, aus.
Hochmethylierte oder hochveresterte Pektine
   - haben per Definition einen Veresterungsgrad größer 50 % bis 75 %
   - gelieren bei einem Zuckergehalt von mindestens 55 Gewichts-%,
   - brauchen dafür einen pH-Wert von 1-3,5,
   - können also nur in sauren, stark zuckerhaltigen Produkten eingesetzt werden, z. B. in Konfitüren und Fruchtfüllungen.
Niedrigmethylierte oder niederveresterte Pektine
   - haben per Definition einen Veresterungsgrad zwischen 50 % und 5 %,
   - können in Anwesenheit von mehrwertigen Kationen auch ohne Zucker Gelee bilden,
   - brauchen dafür einen pH-Wert von 1-7,
   - werden zur Herstellung von pumpfähigen Fruchtzubereitung vor allem für Milchprodukte verwendet.
   - werden zur Herstellung von kalorienreduzierten Fruchtaufstrichen verwendet.
Amidopektine (amidierte Pektine, Pektinamide)
   - fallen in die Gruppe der niedrigmethylierten Pektine, wobei ein bestimmter Anteil der Carbonsäure-Gruppen durch die Umsetzung mit Ammoniak als Amid vorliegt,
   - gelieren wie niedrigmethylierte Pektine sowohl mit Zucker als auch mit mehrwertigen Kationen,
   - die Geleigenschaften werden aber vom Gehalt an mehrwertigen Kationen, insbesondere Calcium, weniger beeinflusst. Sie sind somit robuster in der Anwendung.

Bevorzugt ist das Pektin zumindest teilweise verestertes Pektin und/oder zumindest teilweise amidiertes Pektin, ausgewählt aus der Gruppe bestehend aus Citruspektin und/oder Apfelpektin.

Diese Pektine enthalten unter anderem Hemicellulose. Apfelpektin enthält zusätzlich dazu auch Stärke, Xylan und Flavonoide. Es besitzt einen neutralen Geschmack und ermöglicht so vielfältige durch geeignete Zusätze zu ermöglichende Geschmacksrichtungen. Citruspektin enthält zusätzlich Terpen und wenige Flavonoide. Es ist farblos und besitzt Zitronen-Geschmack. Es kann deswegen sowohl sehr gut ohne als auch mit weiteren Zusatzstoffen zur Erweiterung der Aromenvielfalt eingesetzt werden.

Bei dem, neben Pektin enthaltenen, Inulin in der erfindungsgemäßen Mischung können grundsätzlich alle aus dem Stand der Technik bekannten Inuline eingesetzt werden. Inulin (auch Alantstärke, Formel III) ist ein Gemisch von Polysacchariden aus Fructosemolekülen mit einer Kettenlänge bis zu 100 Molekülen, und einem endständigen Glucoserest, und zählt zu den Fructanen. Inulin wird in vielen Pflanzen als Reservestoff eingelagert, besonders in Arten der Korbblütler: etwa Topinambur, Zichorien, Dahlie, Artischocke, Löwenzahn, Schwarzwurzeln, aber auch in Doldenblütlern, z. B. der Pastinake.

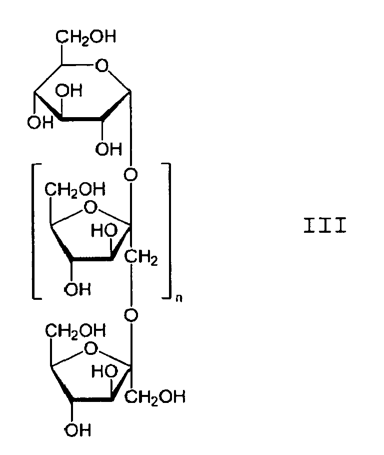

Inulin ist ein prebiotischer Ballaststoff, der nicht quellbar ist. Es kann auch als Trennmittel eingesetzt werden, z.B. bei der Herstellung suspendierbarer Partikel. Es wird erst im Magen gelöst. Durch Inulin werden die Bifidus- und Laktobakterien, die zur gesunden Darmflora gehören und eine Darm-Besiedelung durch krankheitserregende Bakterien unterbinden, ernährt und deren Bildung gefördert. Die Stoffwechselprodukte der nützlichen Bakterien unterstützen die Darmfunktion, dienen ferner dem Training des Abwehrsystems und einige dieser Bakterienstämme produzieren sogar essentielle Vitamine.

In einer vorteilhaften Weiterbildung stammt das Inulin aus Chicoree. Es besteht aus 2-60 Monomeren (im Mittel > 10) und entspricht nur 0,65 Broteinheiten pro 100g.

Das erfindungsgemäße Nahrungsergänzungsmittel enthält nun die vorstehend beschriebenen Edukte Pektin und Inulin in Form von losen und/oder agglomerierten Partikeln.

Für den Fall, dass lose Partikel vorhanden sind, weisen diese mindestens eine auf dem Kern aufgebrachte, den Kern im Wesentlichen vollständig umschließende Inulin-haltige Beschichtung auf.

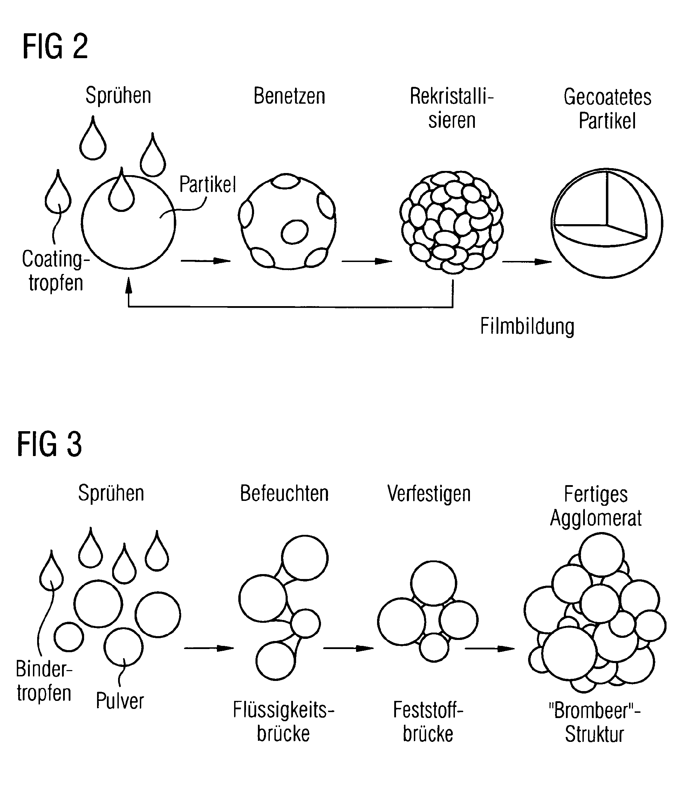

Unter losen Partikeln werden Partikel verstanden, wie sie in Fig. 2 dargestellt sind. Diese sind nahezu beliebig dosierbar.

Die Herstellung solcher Partikeln erfolgt durch Beschichten (Coaten). Die Überzüge müssen dabei dicht und ohne mechanische Schäden und Risse sein. Das Filmcoaten ist ein effektives Verfahren zum Auftragen von Schutzfilmen zur Beeinflussung der Partikeleigenschaften.

Bevorzugten weist das Nahrungsergänzungsmittel agglomerierte Partikel aus mindestens zwei Pektinen und/oder zumindest teilweise verestertem Pektin und/oder zumindest teilweise amidiertem Pektin enthaltende Kerne auf, die miteinander durch eine Inulin-haltige Vernetzung zum agglomerierten Partikel verbunden sind.

Agglomerierte Partikel (vgl. Fig. 3) lassen sich z.B. mittels Wirbelschicht-Granulation herstellen. Dies ist ein modernes Verfahren zum Aufbau von Granulaten aus Pulver. Dabei wird Pulver zur Bildung von Flüssigkeitsbrücken zwischen den Partikeln befeuchtet. Die eingesprühte Flüssigkeit kann entweder Wasser oder ein organisches Lösemittel, ein in Flüssigkeit gelöstes Pulver oder ein anderer Binder sein. Die feuchten Granulate werden getrocknet und bei Bedarf gekühlt. Durch die relativ geringen mechanischen Kräfte in der Wirbelschicht sind die Agglomerate/Granulate locker, haben eine geringe Schüttdichte und sind hervorragend wasserlöslich. Als Produkte werden Partikel mit poröser Struktur erhalten, die eine hervorragende Löslichkeit wie auch Dispergierbarkeit aufweisen. Sie können gut dosiert und tablettiert werden. Durch die steuerbare Korngrößenverteilung sind staubfreie Korngrößen zwischen 0,2 mm und 2,5 mm üblich, die ein gutes Fließverhalten aufweisen.

Es hat sich gezeigt, dass es beim erfindungsgemäßen Mittel günstig ist, wenn der mittlere Partikeldurchmesser d₅₀ der losen und/oder agglomerierten Partikel zwischen 100 und 1000 µm, bevorzugt zwischen 300 und 700 µm liegt. Dadurch werden ein Verkleben der Partikel und eine Entmischung der Suspension vermieden.

In einer weiteren bevorzugten Variante beträgt der Feststoffgehalt an Pektin, zumindest teilweise verestertem Pektin und/oder zumindest teilweise amidiertem Pektin, bezogen auf das Gesamtgewicht des Nahrungsergänzungsmittels, zwischen 50 und 90 Gew.-%, bevorzugt zwischen 65 und 85 Gew.-%, besonders bevorzugt zwischen 70 und 80 Gew.-%.

Der Feststoffgehalt an Inulin beträgt in einer vorzugsweisen Ausführungsform, bezogen auf das Gesamtgewicht des Nahrungsergänzungsmittels, zwischen 10 und 50 Gew.-%, bevorzugt zwischen 15 und 35 Gew.-%, besonders bevorzugt zwischen 20 und 30 Gew.-%.

In dieser Konzentration wirkt Inulin sehr gut als Trennmittel.

In einer weiteren Ausführungsform enthält das Nahrungsergänzungsmittel mindestens einen weiteren Zusatzstoff, ausgewählt aus der Gruppe bestehend aus Sacchariden, wie z.B. Mono-, Di-, Oligo-, und/oder Polysacchariden; Konservierungsstoffen; organischen Säuren, wie z.B. Zitronensäure, Weinsäure, Traubensäure und/oder deren Salze; Aromastoffen; Süßstoffen; Farbstoffen; Mineralstoffen; Salzen; weitere Ballaststoffen, bevorzugt in einer Menge zwischen 0 und 10 Gew.-% sowie deren racemischen Gemischen, bezogen auf das Gesamtgewicht des Nahrungsergänzungsmittels.

Durch diese Zusätze wird unter anderem eine große Bandbreite von Geschmacksrichtungen ermöglicht. Ferner entsteht so ein Nahrungsergänzungsmittel, dass vielfältig und einfach in der Dosierbarkeit einzusetzen ist.

Beim erfindungsgemäßen Mittel ist es günstig, wenn ein Restwassergehalt von 0,1 bis 10 Gew.-%, bevorzugt zwischen 2,5 und 7,5 Gew.-% vorhanden ist. Dieser dient der Stabilisierung der Zusammensetzung und leistet zusätzlich einen Beitrag zur Löslichkeit des Nahrungsergänzungsmittels.

Es ist weiterhin vorteilhaft, wenn die Schüttdichte zwischen 100 und 500 g/l, bevorzugt zwischen 150 und 300 g/l liegt.

Bei diesen Schüttdichten wird eine hervorragende Instantisierbarkeit und, damit verbunden, eine hohe Produktqualität erhalten.

Die Erfinder konnten zeigen, dass insbesondere die nachfolgend angegebene Zusammensetzung (Rahmenrezeptur) des Mittels günstige Eigenschaften aufweist. Rahmenrezeptur: Agglomerierte Partikel aus mindestens zwei Kernen, die Apfel- und/oder Citruspektin enthalten und über eine Inulin-haltige Vernetzung verbunden sind, wobei der Gewichtsanteil der Beschichtung zwischen 20 und 30 Gew.-%, bezogen auf das Gesamtgewicht des Partikels, und der Gewichtsanteil des Kerns zwischen 70 und 80 Gew.-%, bezogen auf das Gesamtgewicht des Partikels, beträgt.

Vorzugsweise ist das Nahrungsergänzungsmittel insbesondere ein Getränk, und liegt in Form einer wässrigen Lösung, einer wässrigen Dispersion und/oder eine mit Wasser gequollene Paste vor.

Bei der Erfindung ist besonders hervorzuheben, dass mit der Instantisierbarkeit des Mittels große Vorteile verbunden sind. So können durch Variation des Pektin-Veresterungsgrades und durch Zusatzstoffe die Geschwindigkeit der Gelbildung, die Gelfestigkeit, die Aromafreigabe und die Streichfestigkeit gezielt gesteuert werden. Diese Darreichungsformen können auch anderen Produkten beigemischt werden. Ferner ist auch eine trinkbare Suspension möglich, die eine erst im Magen lösliche dünne Beschichtung aufweist, die das quellen im Glas verzögert.

Die bevorzugte Konzentration der wässrigen Lösung bzw. Dispersion liegt zwischen 0,7 und 7 g/200 ml. Vorteilhaft dabei ist, dass trotz dieser hohen Konzentration noch eine Trinkbarkeit gewährleistet ist. Dadurch ist leicht möglich, die im Stand der Technik schon bekannte Menge von Pektin (10-20 g) auf einfache Weise einzunehmen und die gesundheitsfördernde Wirkung des Pektins auszunutzen. Gleiches gilt für das Inulin. Hier liegt die empfohlene Tagesdosis bei 10-15 g.

Die Zusammensetzung hat weiter den Vorteil, wenn sie in der genannten Konzentration eingesetzt wird, dass ein niedriger Energiegehalt resultiert und das Mittel so unkompliziert als Getränk vor den Mahlzeiten eingenommen werden kann, indem 1 bis 2 Teelöffel der Formulierung in 200 ml Wasser eingerührt werden. Das enthaltene Pektin quillt im Magen und erhöht so die Viskosität des Darminhaltes. Durch die Gelstruktur bzw. das 3D-Netzwerk mit ionischen und hydrophoben Gruppen wird die Resorption der Nährstoffe verlangsamt sowie die Arbeit der Verdauungsenzyme gebremst. Weiterhin werden Schadstoffe (Schwermetalle) immobilisiert. Dies trifft genauso auf Cholesterin und Gallensäure zu. Diese werden ausgeschieden und damit der Gesamt- und LDL-Cholesterinwert gesenkt. Weiterhin werden Durchfallerreger gehemmt. Inulin wird ebenso wie Pektin nicht im Dünndarm resorbiert, d.h. es wirkt als Ballaststoff. Im Dickdarm wird es von Bifidus und Lacto-Bakterien zu kurzen Fettsäuren verstoffwechselt und fördert diese gesunde Darmflora, welche die Darmfunktion unterstützt und Krankheitserregende Bakterien abwehrt. So kann eventuell Darmkrebs vorgebeugt werden wie auch die Blutfettwerte gebessert werden.

Durch die Ballaststoffwirkung wird ein Sättigungsgefühl erreicht und die Energiedichte der Nahrung, wie oben beschrieben, vermindert. Die Nährstoffresorption wird verlangsamt und somit steigen die Blutzuckerwerte weniger. Da die Feuchte im Dickdarm reguliert wird, wird zum einen die Peristaltik angeregt und auch Verstopfungen vorgebeugt.

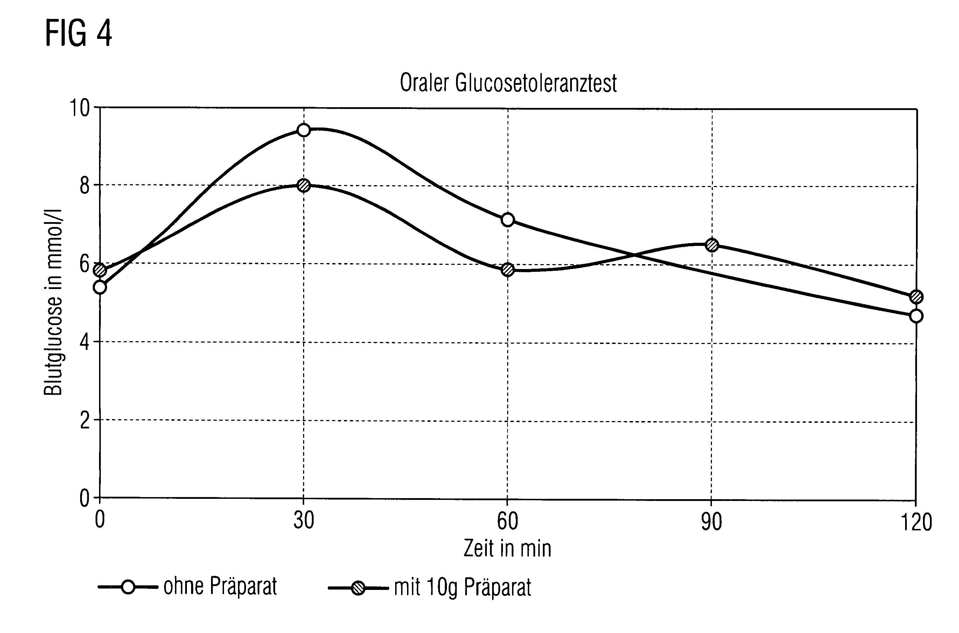

Ein weiterer Vorteil bei regelmäßiger Einnahme zieht eine Gewichtsreduktion nach sich. Ferner werden die Blutzucker- und Blutfettwerte verbessert und die Darmgesundheit gefördert (s. Fig. 4).

Die Erfindung betrifft ebenso ein Verfahren zur Herstellung eines Nahrungsergänzungsmittels, wie vorstehend beschrieben. Erfindungsgemäß wird eine wässrige Inulin-haltige Lösung auf ein Partikel, enthaltend Pektin, zumindest teilweise verestertes Pektin und/oder zumindest teilweise amidiertes Pektin, unter Ausbildung einer Inulin-haltigen Beschichtung aufgesprüht und das entstehende beschichtete Partikel getrocknet.

Bevorzugt weist beim erfindungsgemäßen Verfahren die wässrige Inulin-haltige Lösung eine Inulinkonzentration von 1 bis 30 Gew.-%, bevorzugt von 20 bis 25 Gew.-% auf.

In diesen Konzentrationen ist Inulin besonders gut lösbar und kann sehr gut aufgesprüht werden. Weiterhin wirkt es so besonders gut als Trennmittel und vermeidet ein unerwünschtes Zusammenklumpen der Partikel. Dabei entsteht ein poröses Granulat mit großer benetzbarer Oberfläche, besserer Löslichkeit bzw. Dispergierbarkeit.

In einer weiteren bevorzugten Ausführungsform wird die wässrige Inulin-haltige Lösung mit einer Temperatur zwischen 20 °C und 90 °C, bevorzugt zwischen 30 und 75 °C, besonders bevorzugt zwischen 40 und 55 °C aufgesprüht. In diesen Temperaturbereichen ist die Lösung besonders stabil und sowohl sehr gut hergestellt als auch eingesetzt werden.

Vorzugsweise erfolgt das Aufsprühen der Inulin-haltige Lösung auf eine Schüttung der Partikel, die durch eine aufwärtsgerichtete Strömung eines Fluids in einen fluidisierten Zustand versetzt wird. Dadurch wird die Lösung sehr gut verteilt. Zusätzlich wird so eine optimale Beschichtung ermöglicht.

In einer vorteilhaften Weiterbildung weist das Fluid eine Temperatur zwischen 20 und 100 °C, bevorzugt zwischen 50 und 90 °C, besonders bevorzugt zwischen 60 und 80 °C auf. In den angegebenen Temperaturbereichen ist das Fluid besonders stabil und gut im Prozess einzusetzen, da es eine optimale Viskosität aufweist.

Bevorzugt wird das Verfahren als top-spray- bzw. als Wurster-Verfahren durchgeführt.

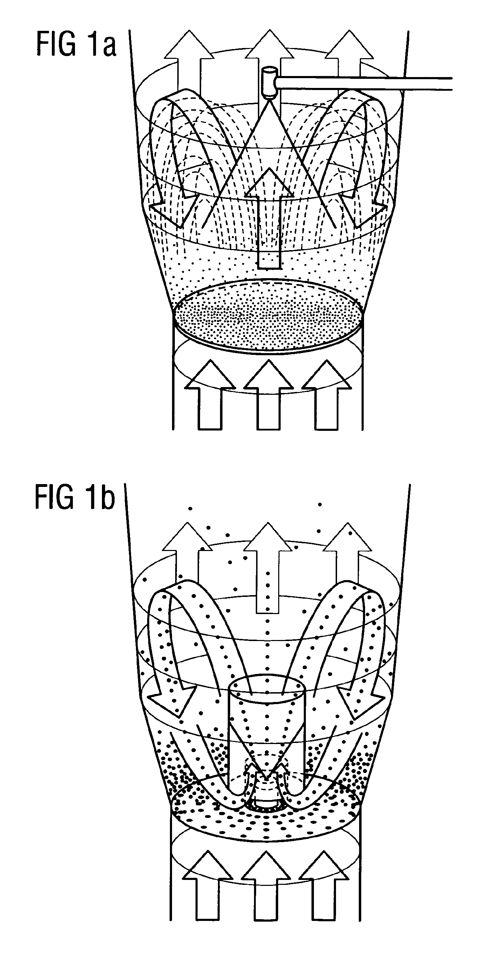

Das top-spray-Verfahren (Fig. 1a) wird für allgemeine Überzüge bis hin zum Enteric Coating eingesetzt.

Beim top-spray-Verfahren werden in der Wirbelschicht (batch und kontinuierlich) Partikel im Strom der erwärmten Zuluft, die über eine Bodenplatte in den Produktbehälter eingetragen wird, fluidisiert.

Die Beschichtungsflüssigkeit (Coatingflüssigkeit) wird über eine Düse gegen den Luftstrom (countercurrent) von oben herab in das Wirbelbett eingesprüht. Bei der weiteren Aufwärtsbewegung der Teilchen im Luftstrom erfolgt die Trocknung. Kleine Tropfen und eine niedrige Viskosität des Sprühmediums sichern eine gleichmäßige Verteilung.

Die Beschichtung (Coating) im kontinuierlichen Fließbett ist besonders geeignet für Schutzüberzüge wie auch Farbüberzüge bei hoher Produktdurchsatzrate.

Das Produkt wird auf der einen Seite der Anlage kontinuierlich zugegeben und wird durch den Luftstrom über den Siebboden weiter transportiert. Je nach Anwendung wird die Anlage in Vorheizzonen, Sprühzonen und Trockenzonen unterteilt. Die trockenen überzogenen Teilchen werden kontinuierlich ausgetragen.

Das Wurster-Verfahren bzw. bottom-spray-coating (Fig. 1b) eignet sich besonders für eine gesteuerte Wirkstofffreisetzung (controlled release).

Im Wurster-Prozess kann ein vollständiger Verschluss der Oberfläche mit geringem Einsatz von Beschichtungs-Substanz erreicht werden.

Die Sprühdüse wird in der Bodenplatte montiert, wodurch ein dem Zuluftstrom gleichgerichtetes Sprühbild entsteht (concurrent). Durch den Einsatz eines Wurster-Zylinders und der Bodenplatte mit unterschiedlicher Perforation werden die zu überziehenden Teilchen im Inneren des Wurster-Rohres beschleunigt und im Gleichstrom durch den Sprühkegel geleitet.

Bei der weiteren Aufwärtsbewegung trocknen die Teilchen und fallen außerhalb des Wursterrohres wieder Richtung Bodenplatte zurück. Sie werden von der Außenseite wieder zur Innenseite des Rohres geleitet, wo sie erneut durch den Sprühstrahl beschleunigt werden. Es entstehen dadurch sehr homogene Filme. Unterschiedlich große Partikel werden gleichmäßig befilmt.

Ein mittig angeordnetes Steigrohr zerteilt bei Wurster-Prozess den Prozessraum. Innerhalb des Rohres herrscht eine höhere Gasgeschwindigkeit, die das feste Produkt nach oben transportiert. Im äußeren Ring liegt die Gasgeschwindigkeit nur wenig oberhalb der Lockerungsgeschwindigkeit. So werden die Partikel kreisförmig vertikal bewegt.

Durch den kontrollierten Materialfluss wird innerhalb kurzer Prozesszeiten eine gleichmäßige Beschichtung erzielt.

Bei auf diese Weise beschichteten Produkten erfolgt weniger Abrieb. Ferner besitzen sie ein glatte Oberfläche und damit verbunden ein gutes Fließverhalten. Auch die Maskierung von Geschmack und Geruch kann so ermöglicht werden. Durch eine Beschichtung kann ein guter Schutz vor Licht, Luft oder Feuchtigkeit, je nach Erfordernis, generiert werden. Wenn ein Mehrschichtenaufbau erwünscht ist, ergeben sich durch Einsatz dieses Verfahrens dichte Trennschichten. Es können gezielt Wirkstoffe freigesetzt werden, wenn die Beschichtung nur in speziellen Milieus (z.B. Magen, Darm) aufgelöst werden kann. Ein weiteres mögliches Ziel kann die Retardierung des Inhaltsstoffes sein, welche durch Auflösungsverzögerung erreicht wird. Auch eine geringe Hygroskopizität lässt sich durch spezielle Beschichtungen ermöglichen. Dies bewirkt eine längere Stabilität im z.B. pulverförmigen Zustand. Durch eine geeignete Beschichtung wird die optische Attraktivität eines Produktes ermöglicht, die unter Anderem auch der Arzneimittelsicherheit zuträglich sein kann.

Die Erfindung wird nachfolgend durch die Figuren 1 bis 4 und die Durchführungsbeispiele 1 bis 4 näher erläutert, ohne diese auf die in den Ausführungsbeispielen dargestellten varianten einzuschränken.
- Fig. 1a: zeigt schematisch den top-spray-Prozess.
- Fig. 1b: zeigt schematisch den bottom-spray-Prozess bzw. Wurster-Prozess.
- Fig. 2: zeigt die verschiedenen Stufen während der Bildung eines ummantelten Partikels.
- Fig. 3: zeigt verschiedene Stufen während der Bil- dung eines Agglomerats.
- Fig. 4: zeigt den Blutglucosegehalt in Abhängigkeit von der Zeit.

In Fig. 1a ist schematisch der top-spray-Prozess dargestellt, wie es aus dem Stand der Technik bekannt ist. Dieser Prozess wurde bereits näher erläutert.

Fig. 1b zeigt eine schematische Darstellung des Wurster-Prozesses. Auch dieser ist aus dem Stand der Technik bekannt und wurde bereits ausführlich behandelt.

In Fig. 2 ist der Prozessverlauf für die Bildung eines ummantelten Partikels dargestellt. Nach dem Aufsprühen der Flüssigkeit wird die Oberfläche des Partikels benetzt. Sie kristallisiert anschließend aus. Diese Verfahrensschritte werden so lange wiederholt, bis ein vollständig ummanteltes Partikel erhalten wird.

Fig. 3 beschreibt den Prozess zur Bildung von Agglomeraten. Durch die Bindertropfen wird zwischen den einzelnen Pulver-Partikeln eine Flüssigkeitsbrücke ausgebildet, die sich anschließend verfestigt. Es resultiert schließlich ein festes Agglomerat mit einer brombeer-artigen Struktur.

In Fig. 4 ist das Ergebnis des oralen Glucosetoleranztests dargestellt. Hier ist der Blutglucosegehalt in Abhängigkeit von der Zeit aufgetragen. Ohne das Nahrungsergänzungsmittel steigt der Blutglucosgehalt erst stark an und fällt nach 30 min linear ab. Durch die zusätzliche Einnahme von 10 g des Nahrungsergänzungsmittels steigt der Blutglucose-Wert deutlich weniger an und die Kinetik weist einen nahezu konstanten Blutglucosegehalt im beobachteten Messzeitraum auf.

Zur Herstellung des Nahrungsergänzungsmittels werden folgende Rohstoffe eingesetzt:
1. Pektin Amid AF 005 (Herbstreith Fox)
   amidiertes Apfelpektin, Veresterungsgrad (DE) 32-40 %, Amidierungsgrad (DA) 10-14 %, standardisiert mit 11 % Dextrose;
2. Pektin Classic CU 201 (Herbstreith Fox)
   Citruspektin (DE) 70-74 %, (DA) 0 %, ohne Dextrose;
3. Inulin Beneo ST-Gel (Orafit)
   Chicoreeinulin, Polymerisierungsgrad 2-60, 0,1 % Glucose, < 4 % Glucose + Fructose, < 8 % Saccharose;
4. Sucralose (Tate & Lyle)
5. Aromen (z.B. Banana PS 84229-31) (Givaudan) auf Maltodextrin überlagert.

### Beispiel 1:

Im top-spray-Verfahren (Düsenposition: oben, Düsendurchmesser 0,8 mm) wird eine 30 %ige Inulinlösung auf das Pektin bis zu einem Masseanteil von 25 % aufgesprüht.

Da sich das Produktvolumen im Laufe des Prozesses fast verdoppelte und das Produkt gegen Ende nur mit viel Luft mobil gehalten werden konnte, wurde eine Vorlagenmenge von 400 g Pektin CU 201 (Citruspektin) gewählt.

Das Produkt ist hitzestabil. Die Produkttemperatur lag bei 40 bis 55 °C, die Zulufttemperatur wurde von anfangs 85 °C auf 80°C gesenkt. Getrocknet wurde nur kurz und ohne Zuluftheizung.

Die Inulin-Wasser-Sprühlösung wurde bei 70 °C hergestellt und in einem Temperaturbereich von 40-50°C verarbeitet. Der Sprühdruck betrug 1,5 bar. Die Sprührate wurde während des Herstellungsprozesses gesteigert. Die Sprührate wurde von 14 g/min schrittweise auf 22 g/min gesteigert und der Volumenstrom wurde von 40 m³/h auf 95 m³/h gesteigert.

Die Aroma-Süßstofflösung wurde mit 12 g/min bei 70 °C Zuluft aufgesprüht. Das Produkt beinhaltet eine Restfeuchte von ca. 5 %. Die Gesamtprozessdauer betrug bei Vorlage von 400 g ca. 30 min (40 min mit Aroma).

### Beispiel 2:

Im Wurster-Verfahren (Steigrohrhöhe: 15 cm, Bodenplatte: D, Düsendurchmesser: 0,8 mm) wurde auf 600 g Pektin CU 201 (Citruspektin) eine 30 %-ige Inulinlösung bis zu einem Masseanteil von 25 % aufgesprüht.

Die Produkttemperatur lag bei 35 bis 55 °C, die Zulufttemperatur wurde von anfangs 85 °C auf 80 °C gesenkt. Getrocknet wurde nur kurz und ohne Zuluftheizung bis zur Restfeuchte 6 %.

Der Sprühdruck betrug 1,5 bar. Die Sprührate wurde von 14 g/min auf 22 g/min gesteigert, der Volumenstrom von 20 m³/h auf 90 m³/h.

Die Aroma-Süßstofflösung wurde mit 20 g/min bei 80 °C Zuluft und bei einer Produkttemperatur von 45 °C aufgesprüht. Getrocknet wurde nur kurz und ohne Zuluftheizung. Die Gesamtprozessdauer betrug bei Vorlage von 600 g ca. 36 min (48 min mit Aroma).

Im Folgenden werden verschiedene Messungen, die mit Pektinlösungen durchgeführt wurden, näher erläutert.

### Beispiel 3:

### Apfelpektin Pektinamid AF 005

25 % Inulin, 75 % Pektinamid 005 (DE: 32-40 %, DA: 10-14 %, inkl. 12 % Dextrose), 1 g Pektin entspricht 1,13 g standartisiertem Pektin, entspricht 1,42 g Inulin/Pektin entspricht 1,47 g Probe mit 3,5 % Restfeuchte.

Lösungen in Wasser, 20 °C, pH 7,8, Calciumgehalt: ca.
60 mg/l
3 g / 200 ml = 1 % Wirkstoff Pektin
6 g / 200 ml = 2 % Wirkstoff Pektin

Nachfolgend sind in den Tabellen 1 bis 3 Eigenschaften der oben genannten Lösungen zusammengestellt.

**Tabelle 1:**

| **Lösungen Pektingehalt** | **pH** | **Viskosität in mPas** | | **Trinkeigenschaften** |
|---|---|---|---|---|
| | | t =0 | t = 60 min | |
| 1 % | 5,01 | 18 | 37 | gut trinkbar |
| 2 % | 4,51 | 50 | 100 | trinkbar wie Bananensaft, saurer als 1 %-ig |

In Tabelle 1 sind die Trinkeigenschaften in Abhängigkeit von der Viskosität der Lösungen dargestellt. Die Viskosität steigt nach dem Einrühren, anfangs wird ein flockiger Niederschlag gebildet, der sich etwas absetzt und dann ausgeliert, bis homogenes Gel mit konstant bleibender Viskosität (nach ca. 90 sec.) erhalten wird. Bei den höheren Konzentrationen ist die Viskosität unten im Glas höher (Eintauchtiefe beachten).

**Tabelle 2:**

| Pektin | Viskosität | Spindel | U/min |
|---|---|---|---|
| 1 % | 35 | 1 | 100 |
| | 36 | | 60 |
| | 38 | | 30 |
| 2 % | 100 | 2 | 100 |
| | 102 | | 60 |
| | 103 | | 50 |

In Tabelle 2 ist die Viskosität von verschiedenen Apfelpektin Pektinamid AF 005-Konzentrationen in Abhängigkeit von der Rührgeschwindigkeit dargestellt. Offensichtlich variiert die Viskosität einer Konzentration hier nur gering.

**Tabelle 3:**

| **Zeit [sec]** | **Viskosität [mPas]** **Zugabe 6 g/200 ml** | **Spindel U/min** | |
|---|---|---|---|
| 5 | | 2 | 200 |
| 20 | | 2 | 200 |
| 40 | 46 | 2 | 200 |
| 60 | 69 | 2 | 200 |
| 70 | 75 | 2 | 200 |
| 90 | 81 | 2 | 200 |
| 120 | 91 | 2 | 200 |
| 140 | 88 | 2 | 200 |
| 210 | 84 | 2 | 200 |
| 270 | 82 | 2 | 200 |
| 300 | 82 | 2 | 200 |
| gerührt | 100 | 2 | 100 |

Tabelle 3 zeigt die Viskosität einer 6 g/200 ml enthaltenden Apfelpektinlösung (2%ig) in Abhängigkeit von der Zeit bei konstanter Rührgeschwindigkeit. Hier liegt die gemessene Viskosität im vollständigen Messzeitraum unter der sog. "Schluckgrenze" von 100 mPas.

### Beispiel 4:

### Citruspektin CU 201

25 % Inulin, 75 % Pektin CU 201 (DE 70-74 %, DA 0 %, 0 % Dextrose

1 g Pektin entspricht 1,33 g Inulin/Pektin, entspricht 1,40 g Probe mit 5 % Restfeuchte

Lösungen in Wasser, 20 °C, pH 7,8, Calciumgehalt: ca.
60 mg/l
2,8 g / 200 ml = 1 % Wirkstoff Pektin
4,2 g / 200 ml = 1,5 % Wirkstoff Pektin

Nachfolgend sind in den Tabellen 4 bis 8 Eigenschaften der oben genannten Lösungen zusammengestellt.

**Tabelle 4:**

| **Lösungen Pektingehalt** | **pH** | **Viskosität in mPas** | | **Trinkeigenschaften** |
|---|---|---|---|---|
| | | **t = 2 min** | **t = 10 min** | |
| in Wasser pH 7.8 | | | | |
| 1 % | 3,29 | 40 | 74 | gut trinkbar, Zitronengeschmack |
| 1 % + NaOH | | | | |
| | 7,7 | | 74 | durch Zugabe von Base |
| | 9,1 | | 70 | weniger viskos |
| | 10 | | 34 | |
| | 12 | | 25 | |
| 1 % Na₂CO₃ | pH | t = 2 min | t = 5 min | |
| 0,14 g Na₂CO₃ | 6,3 | 57 | 91 | Bläschen |
| 0, 21 g Na₂CO₃ | 7,1 | 45 | 82 | |

Tabelle 4 zeigt die Viskosität der 1%igen Pektinlösungen in Abhängigkeit von der Zeit und der Anwesenheit von Natronlauge oder Natriumcarbonat.

**Tabelle 5:**

| **Zeit [sec]** | **Viskosität [mPas]** **2,8 g/200 ml** | **Spindel** | **U/min** |
|---|---|---|---|
| 60 | 18 | 2 | 200 |
| 120 | 41 | 2 | 200 |
| 180 | 50 | 2 | 200 |
| 240 | 60 | 2 | 200 |
| 300 | 65 | 2 | 200 |
| 360 | 69 | 2 | 200 |
| 420 | 70 | 2 | 200 |
| 480 | 72 | 2 | 200 |
| 540 | 73 | 2 | 200 |
| 600 | 74 | 2 | 200 |

In Tabelle 5 wir die Viskosität einer 1%igen Classic-Pektin CU 201 enthaltenden Lösung dargestellt. Die Rührgeschwindigkeit beträgt 200 U/min.

**Tabelle 6:**

| **Zeit [sec]** | **Viskosität [mPas]** **4,2 g/200 ml** | **Spindel** | **U/min** |
|---|---|---|---|
| 30 | 20 | 2 | 200 |
| 60 | 44 | 2 | 200 |
| 90 | 80 | 2 | 200 |
| 120 | 100 | 2 | 200 |
| 150 | 121 | 2 | 200 |
| 180 | 150 | 2 | 200 |
| 210 | 159 | 2 | 200 |
| 240 | 163 | 2 | 200 |
| 330 | 198 | 2 | 200 |
| 600 | 198 | | |

Tabelle 6 zeigt die Viskosität einer 1,5%igen Classic-Pektin CU 201-Lösung in Abhängigkeit von der Zeit. Hier wird innerhalb von 2 min die Schluckgrenze nicht überschritten.

**Tabelle 7:**

| **Zeit [sec]** | **Viskosität [mPas]** **2,8 g/200 ml** | **Spindel** | **U/min** |
|---|---|---|---|
| 30 | 21 | 2 | 200 |
| 60 | 34 | 2 | 200 |
| 90 | 44 | 2 | 200 |
| 120 | 57 | 2 | 200 |
| 150 | 70 | 2 | 200 |
| 180 | 77 | 2 - | 200 |
| 210 | 79 | 2 | 200 |
| 240 | 82 | 2 | 200 |
| 300 | 85 | 2 | 200 |

Tabelle 7 zeigt die Viskositätsmessung einer 1%igen Classic-Pektin CU 201-Lösung, die 2,8 g/200 ml Pektin und 0,14 g Natriumcarbonat enthält. Die Rührgeschwindigkeit beträgt 200 U/min. Die Schluckgrenze wird innerhalb der dargestellten Messzeit z.T. deutlich unterschritten.

**Tabelle 8:**

| **Zeit [sec]** | **Viskosität [mPas]** **2,8 g/200 ml** | **Spindel** | **U/min** |
|---|---|---|---|
| 30 | 10 | 2 | 200 |
| 60 | 24 | 2 | 200 |
| 90 | 35 | 2 | 200 |
| 120 | 45 | 2 | 200 |
| 150 | 58 | 2 | 200 |
| 180 | 74 | 2 | 200 |
| 210 | 79 | 2 | 200 |
| 240 | 80 | 2 | 200 |
| 270 | 82 | 2 | 200 |
| 300 | 84 | | |

In Tabelle 8 ist die Viskosität einer 1%igen Classic-Pektin CU 201-Lösung mit 0,21 Natriumcarbonat in Abhängigkeit von der Zeit dargestellt. Die Rührgeschwindigkeit beträgt 200 U/min. Auch hier liegen die Messwerte für die Viskosität unter der Schluckgrenze von 100 mPas.

## Patentansprüche

1. Nahrungsergänzungsmittel in loser und/oder agglomerierter partikulärer Form, enthaltend:
a) Pektin, zumindest teilweise verestertes Pektin und/oder zumindest teilweise amidiertes Pektin sowie
b) Inulin.

2. Nahrungsergänzungsmittel nach Anspruch 1, **dadurch gekennzeichnet, dass** die losen Partikel einen Pektin, zumindest teilweise verestertes Pektin und/oder zumindest teilweise amidiertes Pektin enthaltenden Kern sowie mindestens eine auf dem Kern aufgebrachte, den Kern im wesentlichen vollständig umschließende Inulin-haltige Beschichtung, aufweisen.

3. Nahrungsergänzungsmittel nach Anspruch 1, **dadurch gekennzeichnet dass** die agglomerierten Partikel mindestens zwei Pektin, zumindest teilweise verestertes Pektin und/oder zumindest teilweise amidiertes Pektin enthaltende Kerne aufweisen, die miteinander durch eine Inulin-haltige Vernetzung zum agglomerierten Partikel verbunden sind.

4. Nahrungsergänzungsmittel nach vorhergehendem Anspruch, **dadurch gekennzeichnet, dass** die losen und/oder agglomerierten Partikel einen mittleren Partikeldurchmesser d₅₀ zwischen 100 und 1000 µm, bevorzugt zwischen 300 und 700 µm aufweisen.

5. Nahrungsergänzungsmittel nach einem der vorhergehenden Ansprüche, **dadurch gekennzeichnet, dass** der Feststoffgehalt an Pektin, zumindest teilweise verestertem Pektin und/oder zumindest teilweise amidiertem Pektin, bezogen auf das Gesamtgewicht des Nahrungsergänzungsmittels, zwischen 50 und 90 Gew.-%, bevorzugt zwischen 65 und 85 Gew.-%, besonders bevorzugt zwischen 70 und 80 Gew.-% beträgt.

6. Nahrungsergänzungsmittel nach einem der vorhergehenden Ansprüche, **dadurch gekennzeichnet, dass** der Feststoffgehalt an Inulin, bezogen auf das Gesamtgewicht des Nahrungsergänzungsmittels, zwischen 10 und 50 Gew.-%, bevorzugt zwischen 15 und 35 Gew.-%, besonders bevorzugt zwischen 20 und 30 Gew.-% beträgt.

7. Nahrungsergänzungsmittel nach einem der vorhergehenden Ansprüche, **dadurch gekennzeichnet, dass** mindestens ein weiterer Zusatzstoff, ausgewählt aus der Gruppe bestehend aus Sacchariden, wie z.B. Mono-, Di-, Oligo-, und/oder Polysacchariden; Konservierungsstoffen; organischen Säuren, wie z.B. Zitronensäure, Weinsäure, Traubensäure und/oder deren Salze; Aromastoffe; Süßstoffe; Farbstoffe; Mineralstoffe; Salze; weitere Ballaststoffe, bevorzugt in einer Menge zwischen 0 und 10 Gew.-% sowie deren racemischen Gemischen, bezogen auf das Gesamtgewicht des Nahrungsergänzungsmittels enthalten ist.

8. Nahrungsergänzungsmittel nach einem der vorhergehenden Ansprüche, **dadurch gekennzeichnet, dass** das Pektin, zumindest teilweise verestertes Pektin und/oder zumindest teilweise amidiertes Pektin ausgewählt ist aus der Gruppe bestehend aus Citruspektin und/oder Apfelpektin.

9. Nahrungsergänzungsmittel nach einem der vorhergehenden Ansprüche, **dadurch gekennzeichnet, dass** das Inulin aus Chicoree stammt.

10. Nahrungsergänzungsmittel nach einem der vorhergehenden Ansprüche, **gekennzeichnet durch** einen Restwassergehalt von 0,1 bis 10 Gew.-%, bevorzugt zwischen 2,5 und 7,5 Gew.-%.

11. Nahrungsergänzungsmittel nach einem der vorhergehenden Ansprüche, **gekennzeichnet durch** eine Schüttdichte zwischen 100 und 500 g/l, bevorzugt zwischen 150 und 300 g/l.

12. Nahrungsergänzungsmittel nach einem der vorhergehenden Ansprüche, in Form eines losen Partikels mit einem aus Chicoree gewonnenen Inulin beschichteten Kern, der Apfel- und/oder Citruspektin enthält,
und/oder
in Form eines agglomerierten Partikels aus mindestens zwei Kernen, die Apfel- und/oder Citruspektin enthalten und über eine Inulin-haltige Vernetzung verbunden sind ,
wobei der Gewichtsanteil der Beschichtung zwischen 20 und 30 Gew.-% bezogen auf das Gesamtgewicht des Partikels und der Gewichtsanteil des Kerns zwischen 70 und 80 Gew.-% bezogen auf das Gesamtgewicht des Partikels beträgt.

13. Nahrungsergänzungsmittel nach einem der vorhergehenden Ansprüche, **dadurch gekennzeichnet, dass** es als wässrige Lösung, wässrige Dispersion und/oder als eine mit Wasser gequollene Paste vorliegt.

14. Nahrungsergänzungsmittel nach vorhergehendem Anspruch, **dadurch gekennzeichnet, dass** die Konzentration der wässrigen Lösung und/oder Dispersion zwischen 0,7 und 7 g/200 ml.

15. Verfahren zur Herstellung eines Nahrungsergänzungsmittels nach einem der Ansprüche 1 bis 14, bei dem eine wässrige Inulin-haltige Lösung auf ein Partikel, enthaltend Pektin, zumindest teilweise verestertes Pektin und/oder zumindest teilweise amidiertes Pektin, unter Ausbildung einer Inulin-haltigen Beschichtung aufgesprüht und das entstehende beschichtete Partikel getrocknet wird.

16. Verfahren nach vorhergehendem Anspruch, **dadurch gekennzeichnet, dass** die wässrige Inulin-haltige Lösung eine Inulinkonzentration von 1 bis 30 Gew.-%, bevorzugt von 20 bis 25 Gew.-% aufweist.

17. Verfahren nach einem der beiden vorhergehenden Ansprüche, **dadurch gekennzeichnet, dass** die wässrige Inulin-haltige Lösung mit einer Temperatur zwischen 20 °C und 90 °C, bevorzugt zwischen 30 und 75 °C, besonders bevorzugt zwischen 40 und 55 °C aufgesprüht wird.

18. Verfahren nach einem der Ansprüche 15 bis 17, dass **dadurch gekennzeichnet ist, dass** die Inulin-haltige Lösung auf eine Schüttung der Partikel, die durch eine aufwärtsgerichtete Strömung eines Fluids in einen fluidisierten Zustand versetzt wird, aufgesprüht wird.

19. Verfahren nach vorhergehendem Anspruch, **dadurch gekennzeichnet, dass** das Fluid eine Temperatur zwischen 20 und 100 °C, bevorzugt zwischen 50 und 90 °C, besonders bevorzugt zwischen 60 und 80 °C aufweist.

20. Verfahren nach einem der Ansprüche 15 bis 19, **dadurch gekennzeichnet, dass** das Verfahren als top-spray- und/oder als Wurster-Verfahren durchgeführt wird.

## Geänderte Patentansprüche

### Geänderte Patentansprüche gemäss Regel 137(2) EPÜ.

1. Nahrungsergänzungsmittel in loser und/oder agglomerierter partikulärer Form mit einen mittlerer Partikeldurchmesser d₅₀ zwischen 100 und 1000µm,
wobei die losen Partikel einen Pektin, zumindest teilweise verestertes Pektin und/oder zumindest teilweise amidiertes Pektin enthaltenden Kern sowie mindestens eine auf dem Kern aufgebrachte, den Kern im wesentlichen vollständig umschließende Inulin-haltige Beschichtung, aufweisen und
dass die agglomerierten Partikel mindestens zwei Pektin, zumindest teilweise verestertes Pektin und/oder zumindest teilweise amidiertes Pektin enthaltende Kerne aufweisen, die miteinander durch eine Inulin-haltige Vernetzung zum agglomerierten Partikel verbunden sind.

2. Nahrungsergänzungsmittel nach vorhergehendem Anspruch, **dadurch gekennzeichnet, dass** die losen und/oder agglomerierten Partikel einen mittleren Partikeldurchmesser d₅₀ zwischen 300 und 700 µm aufweisen.

3. Nahrungsergänzungsmittel nach einem der vorhergehenden Ansprüche, **dadurch gekennzeichnet, dass** der Feststoffgehalt an Pektin, zumindest teilweise verestertem Pektin und/oder zumindest teilweise amidiertem Pektin, bezogen auf das Gesamtgewicht des Nahrungsergänzungsmittels, zwischen 50 und 90 Gew.-%, bevorzugt zwischen 65 und 85 Gew.-%, besonders bevorzugt zwischen 70 und 80 Gew.-% beträgt.

4. Nahrungsergänzungsmittel nach einem der vorhergehenden Ansprüche, **dadurch gekennzeichnet, dass** der Feststoffgehalt an Inulin, bezogen auf das Gesamtgewicht des Nahrungsergänzungsmittels, zwischen 10 und 50 Gew.-%, bevorzugt zwischen 15 und 35 Gew.-%, besonders bevorzugt zwischen 20 und 30 Gew.-% beträgt.

5. Nahrungsergänzungsmittel nach einem der vorhergehenden Ansprüche, **dadurch gekennzeichnet, dass** mindestens ein weiterer Zusatzstoff, ausgewählt aus der Gruppe bestehend aus Sacchariden, wie z.B. Mono-, Di-, Oligo-, und/oder Polysacchariden; Konservierungsstoffen; organischen Säuren, wie z.B. Zitronensäure, Weinsäure, Traubensäure und/oder deren Salze; Aromastoffe; Süßstoffe; Farbstoffe; Mineralstoffe; Salze; weitere Ballaststoffe, bevorzugt in einer Menge zwischen 0 und 10 Gew.-% sowie deren racemischen Gemischen, bezogen auf das Gesamtgewicht des Nahrungsergänzungsmittels enthalten ist.

6. Nahrungsergänzungsmittel nach einem der vorhergehenden Ansprüche, **dadurch gekennzeichnet, dass** das Pektin, zumindest teilweise verestertes Pektin und/oder zumindest teilweise amidiertes Pektin ausgewählt ist aus der Gruppe bestehend aus Citruspektin und/oder Apfelpektin.

7. Nahrungsergänzungsmittel nach einem der vorhergehenden Ansprüche, **dadurch gekennzeichnet, dass** das Inulin aus Chicoree stammt.

8. Nahrungsergänzungsmittel nach einem der vorhergehenden Ansprüche, **gekennzeichnet durch** einen Restwassergehalt von 0,1 bis 10 Gew.-%, bevorzugt zwischen 2,5 und 7,5 Gew.-%.

9. Nahrungsergänzungsmittel nach einem der vorhergehenden Ansprüche, **gekennzeichnet durch** eine Schüttdichte zwischen 100 und 500 g/l, bevorzugt zwischen 150 und 300 g/l.

10. Nahrungsergänzungsmittel nach einem der vorhergehenden Ansprüche, in Form eines losen Partikels mit einem aus Chicoree gewonnenen Inulin beschichteten Kern, der Apfel- und/oder Citruspektin enthält, und/oder
in Form eines agglomerierten Partikels aus mindestens zwei Kernen, die Apfel- und/oder Citruspektin enthalten und über eine Inulin-haltige Vernetzung verbunden sind ,
wobei der Gewichtsanteil der Beschichtung zwischen 20 und 30 Gew.-% bezogen auf das Gesamtgewicht des Partikels und der Gewichtsanteil des Kerns zwischen 70 und 80 Gew.-% bezogen auf das Gesamtgewicht des Partikels beträgt.

11. Nahrungsergänzungsmittel nach einem der vorhergehenden Ansprüche, **dadurch gekennzeichnet, dass** es als wässrige Lösung, wässrige Dispersion und/oder als eine mit Wasser gequollene Paste vorliegt.

12. Nahrungsergänzungsmittel nach vorhergehendem Anspruch, **dadurch gekennzeichnet, dass** die Konzentration des Nahrungsergänzungsmittels in der wässrigen Lösung und/oder Dispersion zwischen 0,7 und 7 g/200 ml. beträgt.

13. Verfahren zur Herstellung eines Nahrungsergänzungsmittels nach einem der Ansprüche 1 bis 12, bei dem eine wässrige Inulin-haltige Lösung auf ein Partikel, enthaltend Pektin, zumindest teilweise verestertes Pektin und/oder zumindest teilweise amidiertes Pektin, unter Ausbildung einer Inulin-haltigen Beschichtung aufgesprüht und das entstehende beschichtete Partikel getrocknet wird.

14. Verfahren nach vorhergehendem Anspruch, **dadurch gekennzeichnet, dass** die wässrige Inulin-haltige Lösung eine Inulinkonzentration von 1 bis 30 Gew.-%, bevorzugt von 20 bis 25 Gew.-% aufweist.

15. Verfahren nach einem der beiden vorhergehenden Ansprüche, **dadurch gekennzeichnet, dass** die wässrige Inulin-haltige Lösung mit einer Temperatur zwischen 20 °C und 90 °C, bevorzugt zwischen 30 und 75 °C, besonders bevorzugt zwischen 40 und 55 °C aufgesprüht wird.

16. Verfahren nach einem der Ansprüche 12 bis 15, dass **dadurch gekennzeichnet ist, dass** die Inulin-haltige Lösung auf eine Schüttung der Partikel, die durch eine aufwärtsgerichtete Strömung eines Fluids in einen fluidisierten Zustand versetzt wird, aufgesprüht wird.

17. Verfahren nach vorhergehendem Anspruch, **dadurch gekennzeichnet, dass** das Fluid eine Temperatur zwischen 20 und 100 °C, bevorzugt zwischen 50 und 90 °C, besonders bevorzugt zwischen 60 und 80 °C aufweist.

18. Verfahren nach einem der Ansprüche 12 bis 17, **dadurch gekennzeichnet, dass** das Verfahren als top-spray- und/oder als Wurster-Verfahren durchgeführt wird.
